# EUROPÄISCHE PATENTSCHRIFT

(11) **EP 3 264 097 B1**
(45) Veröffentlichungstag und Bekanntmachung des Hinweises auf die Patenterteilung: **27.05.2020**
(21) Anmeldenummer: 16177472.4
(22) Anmeldetag: 01.07.2016
(51) Int. Cl.: G01N 35/00, G01N 35/02, H05K 7/04, H05K 7/10, G01N 35/04, H04L 12/40

(54) **VERFAHREN UND MESSSYSTEM ZUR ÜBERWACHUNG DES VERSCHLEISSES VON SCHLEIFKONTAKTEN**
METHOD AND APPARATUS FOR MONITORING THE WEAR OF SLIDING CONTACTS
PROCEDE ET APPAREIL DE SURVEILLANCE DE L'USURE DE CONTACTS A FROTTEMENT

(43) Veröffentlichungstag der Anmeldung: 03.01.2018
(73) Patentinhaber: Siemens Healthcare Diagnostics Products GmbH, 35041 Marburg (DE)
(72) Erfinder: Steinebach, Wolfgang, 56414 Salz (DE); Verhalen, Christian, 65201 Wiesbaden (DE)

(56) Entgegenhaltungen:
- WO-A2-91/08463
- US-A1- 2007 189 323
- US-A1- 2011 060 855
- US-A1- 2014 120 521

## Beschreibung

Die Erfindung liegt auf dem Gebiet der automatischen in vitro-Diagnostiksysteme. Gegenstand der Erfindung ist ein Messsystem zur Messung einer Probe sowie ein Verfahren zur Überwachung von Schleifkontakten in einem automatischen Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.
Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, umfassen verschiedene Gerätebaugruppen zum Prozessieren der Probe. Beispielsweise werden die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette z.B. zur Entsorgung durch einen Abfallschacht in einen Abfallbehälter verbracht.

Bekannte automatische Analysegeräte umfassen eine Vorrichtung zur photometrischen Untersuchung von Proben. Diese weist beispielsweise eine Probenhalterungseinrichtung für mindestens zwei Probengefäße sowie eine Messeinrichtung und eine bewegbare Einrichtung auf. Die Probenhalterungseinrichtung ist dabei stationär ausgebildet und die Messeinrichtung ist an der bewegbaren Einrichtung angeordnet, so dass sie mittels der bewegbaren Einrichtung relativ zur Probenhalterungseinrichtung verfahrbar ist. Eine solche Vorrichtung ist in der DE 102009043524 A1 beschrieben und hat unter anderem den Vorteil, dass während des Messens kontinuierlich Reagenzien in die Probengefäße pipettiert werden können.

Von besonderer Bedeutung ist bei der oben beschriebenen Vorrichtung, dass die Übertragung von Daten und/oder einer Betriebsspannung zwischen der bewegbaren Einrichtung mit der Messeinrichtung und den ortsfest angeordneten Komponenten in einem Analysegerät möglichst störungsfrei und zuverlässig erfolgt und es insbesondere weniger häufig oder überhaupt nicht zu plötzlichem teilweisem oder vollständigem Ausfall der Übertragung kommt.

Es ist daher Aufgabe der Erfindung ein zuverlässigeres Messsystem, bei dem die Probenhalterungseinrichtung stationär ausgebildet und die Messeinrichtung an einer bewegbaren Einrichtung angeordnet ist, zur Messung einer Probe in einem automatischen Analysegerät zur Verfügung zu stellen.

### Diese Aufgabe wird erfindungsgemäß durch die in den Ansprüchen beschriebenen Gegenstände und Verfahren gelöst.

Die Erfindung geht dabei von der Überlegung aus, dass die Übertragung von Daten und/oder einer Betriebsspannung zwischen einer bewegbaren Messeinrichtung und ortsfest angeordneten Komponenten in einem Analysegerät beispielsweise über ein Gleitkontaktsystem mit Schleifkontakten erfolgen kann. Beispielsweise ist ein Messsystem mit einem solchen Gleitkontaktsystem folgendermaßen aufgebaut. Das Messsystem umfasst eine Messeinrichtung zur Aufnahme von Messwerten einer Messgröße und ein erstes und ein zweites Steuergerät zur Verarbeitung der Messwerte und ein Gleitkontaktsystem mit Schleifkontakten, wobei die Messwerte von der Messeinrichtung zum ersten Steuergerät übertragbar sind und dann vom ersten Steuergerät über die Schleifkontakte zum zweiten Steuergerät übertragbar sind.

Bei dem Gleitkontaktsystem handelt es sich um ein elektromechanisches Bauteil, das insbesondere aufgrund von mechanischem Verschleiß der Kontakte mit der Zeit jedoch altert. Mit zunehmendem Alter des Gleitkontaktsystems kann es zu Störungen wie z.B. kurzfristigen Unterbrechungen bis hin zum völligen Ausfall der elektrischen Kontakte kommen. Solche Störungen sind sehr problematisch, da sie häufig plötzlich auftreten und dann das komplette Analysegerät nicht für Messungen zur Verfügung steht. Dies kann zu einer geringeren Zuverlässigkeit des Messsystems und des Analysegeräts führen.

Es ist daher ein weiterer Gedanke der Erfindung, dass ein zuverlässigeres Messsystem zur Verfügung gestellt werden kann, wenn einzelne, sporadisch auftretende Übertragungsfehler bei der Übertragung von Messwerten vom ersten Steuergerät über die Schleifkontakte zum zweiten Steuergerät erkannt werden und die Übertragungsqualität analysiert wird. Aus dem vermehrten Auftreten von Übertragungsfehlern kann auf zunehmenden Verschleiß der Schleifkontakte, beispielsweise aufgrund einer fortschreitenden Alterung derselben, geschlossen werden. Dies hat den Vorteil, dass die Schleifkontakte rechtzeitig bevor es zu plötzlichen Störungen kommt, gewartet oder ausgetauscht werden können und so die Zuverlässigkeit des Messsystems erhöht wird.

Gegenstand der vorliegenden Erfindung ist ein Messsystem zur Messung einer Probe in einem automatischen Analysegerät. Das Messsystem umfasst eine Messeinrichtung zur Aufnahme von Messwerten einer Messgröße und ein erstes und ein zweites Steuergerät zur Verarbeitung der Messwerte und ein Gleitkontaktsystem mit Schleifkontakten. Die Messeinrichtung und das erste Steuergerät sind relativ zum zweiten Steuergerät bewegbar. Die Messwerte sind von der Messeinrichtung zum ersten Steuergerät übertragbar und dann vom ersten Steuergerät über die Schleifkontakte zum zweiten Steuergerät übertragbar. Das Messsystem umfasst ferner einen Fehlerzähler, der die auftretenden Fehler bei einer Übertragung von Messwerten vom ersten Steuergerät über die Schleifkontakte zum zweiten Steuergerät erfasst.

Dies hat den Vorteil, dass eine Vorhersage über die erwartete noch verbleibende Lebensdauer des Gleitkontaktsystems möglich wird und so plötzliche Störungen des Gleitkontaktsystems seltener auftreten, da das Gleitkontaktsystem rechtzeitig gewartet oder ausgetauscht werden kann.

In vorteilhafter Ausgestaltung des Messsystems erfolgt die Stromversorgung des ersten Steuergeräts und/oder der Messeinrichtung über die Schleifkontakte. Dies hat den Vorteil, dass keine separate Stromquelle an dem Steuergerät und/oder der Messeinrichtung in Form von z.B. Batterien angeordnete werden muss, sondern die Stromversorgung direkt über die Schleifkontakte des Gleitkontaktsystems erfolgen kann.

In weiterer vorteilhafter Ausgestaltung des Messsystems sind das erste Steuergerät und die Messeinrichtung rotierbar gelagert, und das Gleitkontaktsystem umfasst ein Schleifringsystem. Dies hat den Vorteil, dass eine Vielzahl von Proben ringförmig angeordnet und in rascher Abfolge mittels einer einzigen Messeinrichtung gemessen werden kann.

In weiterer vorteilhafter Ausgestaltung des Messsystems ist das zweite Steuergerät ortsfest angeordnet. Dies hat den Vorteil, dass eine leichte Verkabelung des zweiten Steuergeräts mit weiteren ortsfest angeordneten Komponenten des Analysegeräts möglich ist.

In weiterer vorteilhafter Ausgestaltung des Messsystems umfasst das Messsystem ein Controller Area Network Bussystem, bevorzugt ein Controller Area Network Bussystem nach ISO 11898, wobei die Messwerte vom ersten Steuergerät zum zweiten Steuergerät mittels des Controller Area Network Bussystem übertragen werden und wobei der Fehlerzähler ein Teil des Bussystems ist. Dies hat den Vorteil, dass der Fehlerzähler zum Erfassen der Fehler bei der Übertragung der Messwerte vom ersten Steuergerät über die Schleifkontakte zum zweiten Steuergerät besonders leicht und wenig aufwändig bereitgestellt werden kann.

Bei einem Controller Area Network (CAN) Bussystem nach ISO 11898 handelt es sich um ein serielles Bussystem, das nach dem "Multi-Master-Prinzip" arbeitet und mehrere gleichberechtigte Steuergeräte verbindet. Das CAN Bussystem umfasst ein Verfahren, das Kollisionen (gleichzeitiger Buszugriff mehrerer Teilnehmer) auflöst, ohne dass eine gewinnende, höher priorisierte Nachricht beschädigt wird. Dazu sind die Bits - je nach Zustand - dominant bzw. rezessiv (ein dominantes Bit überschreibt ein rezessives). Ein sogenanntes "CAN-Bus Paket" besteht aus einem Identifier, bis zu 8Byte Nutzdaten, einer 16bit Checksumme und weiteren Steuerbits. Zur Datensicherung kommt zyklische Redundanzprüfung zum Einsatz, welche die 16bit Checksumme generiert. Ein Buszugriff wird verlustfrei mittels der bitweisen Arbitrierung auf Basis der Identifier der zu sendenden Nachrichten aufgelöst. Dazu überwacht jeder Sender den Bus, während er gerade den Identifier sendet. Senden zwei Teilnehmer gleichzeitig, so überschreibt das erste dominante Bit eines der beiden Sender das entsprechend rezessive des anderen, was der Sender des rezessiven Bits erkennt und seinen Übertragungsversuch beendet.

Erkennt ein Empfänger einen Fehler in der Übertragung, sendet er einen sogenannten Fehler-Frame, auch als Error-Frame bezeichnet, und veranlasst so alle Teilnehmer, diesen Frame zu verwerfen. Sollten andere Teilnehmer diese Fehlerbedingung erkannt haben, senden sie ihrerseits direkt im Anschluss ein weiteres Error-Frame. Damit wird eine weitere Sicherheitsfunktion des CAN-Protokolls möglich. Um zu vermeiden, dass einzelne Teilnehmer durch irrtümlich erkannte Fehlerbedingungen dauerhaft den Nachrichtentransport blockieren, enthält jeder Teilnehmer Fehlerzähler. Diese Zähler erlauben einen fehlerhaft arbeitenden Teilnehmer in zwei Stufen des Betriebszustands vom CAN Bus zu trennen, wenn er wiederholt Fehler erkennt, welche andere Teilnehmer nicht erkennen oder wiederholt fehlerhafte Frames versendet. Die Stufen nennen sich "error active" (normal), "error passive" (Teilnehmer darf nur noch passive - das heißt rezessive - Error-Frames senden) und "bus off" (Teilnehmer darf nicht mehr senden). Auch der Sender kann durch die zuvor erwähnten Fehlerzähler vom Bus getrennt werden, wenn die Datenübertragung dauerhaft fehlschlägt. Der Sender wiederholt nach dem Error-Frame seine Datenübertragung. Bei einem Teilnehmer handelt es sich z.B. um einen Sender und/oder Empfänger. Bei einem Sender und/oder Empfänger handelt es sich z.B. jeweils um ein Steuergerät.

In weiterer vorteilhafter Ausgestaltung des Messsystems umfasst die Messeinrichtung ein Photometer, das eine photometrische Untersuchung der Probe ermöglicht.

Der Begriff "photometrische Untersuchung", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

Ein weiterer Gegenstand der Erfindung ist ein Verfahren zur Überwachung von Schleifkontakten in einem automatischen Analysegerät, wobei das automatische Analysegerät ein erfindungsgemäßes Messsystem umfasst, aufweisend die Schritte:
a) Bestimmung einer Summe S der auftretenden Fehler durch Addieren der auftretenden Fehler bei der Übertragung der Messwerte vom ersten Steuergerät über die Schleifkontakte zum zweiten Steuergerät über ein vorbestimmtes Zeitintervall T,
b) Vergleich der Summe S der auftretenden Fehler mit einem ersten vorbestimmten Grenzwert G,
c) Ausgeben eines Warnhinweises, dass die Schleifkontakte oder das Gleitkontaktsystem gewartet und/oder ausgetauscht werden müssen, wenn die Summe S größer ist als der erste Grenzwert G,
wobei die Schritte a) und b) mittels des ersten und/oder des zweiten Steuergeräts durchgeführt werden.

Dies hat den Vorteil, dass eine Vorhersage über die erwartete noch verbleibende Lebensdauer des Gleitkontaktsystems möglich wird und so plötzliche Störungen des Gleitkontaktsystems seltener auftreten, da das Gleitkontaktsystem rechtzeitig gewartet oder ausgetauscht werden kann.

Der Grenzwert G kann zum Beispiel empirisch ermittelt werden. Für das eingesetzte Gleitkontaktsystem wird hierzu beispielsweise ein Dauertest durchgeführt, welcher so lange betrieben wird, bis das Gleitkontaktsystem Alterungserscheinungen und Anzeichen einer Beschädigung zeigt. Über den CAN-Bus werden kontinuierlich und in gleichem Maß Daten gesendet und empfangen. In festen Intervallen wird der Fehlerzähler des rotierenden Steuergerätes ausgelesen. Die Differenz zum vorherigen Zählerstand wird ausgelesen. Ist die Differenz positiv, hat sich der Fehlerzähler erhöht. Die Differenz wird auf einen globalen Zähler summiert und bildet die Summe S. Nach Beendigung des Testes wird die Entwicklung von S über die Zeit analysiert und daraus ein bevorzugter Wert für den Grenzwert G ermittelt. Vorteilhafterweise kann hierzu z.B. die Entwicklung von S über die Zeit grafisch dargestellt werden.

Ein Wert für den Grenzwert G kann dabei vorteilhafterweise ermittelt werden, indem der Wert von S zum Startpunkt des letzten Zeitraumes, in dem 30% der gesamten Fehler liegen, den Wert von G festlegt, wobei vorteilhafterweise der Wert von G identisch mit dem Wert von S gewählt wird.

Vorteilhafterweise ist der Wert von G konfigurierbar ausgelegt, um ihn dynamisch anpassen zu können, wenn z.B. mehr Erfahrungen über die Verschleißeigenschaften des Gleitkontaktsystems zu einem späteren Zeitpunkt vorliegen.

Der Dauertest kann vorteilhafterweise beschleunigt werden, indem das Gleitkontaktsystem im Dauertest beispielsweise mit einer höheren Frequenz hin- und her bewegt oder rotiert wird als im Normalbetrieb.

Die Lebensdauer eines Gleitkontaktsystems ist insbesondere auch von der speziellen Ausführung des Gleitkontaktsystems sowie von den jeweiligen Einsatzbedingungen abhängig.

In vorteilhafter Ausgestaltung des Verfahrens umfasst das Messsystem ein drittes Steuergerät, wobei die Schritte a) und b) mittels des ersten, des zweiten und/oder des dritten Steuergeräts durchgeführt werden. Dies hat den Vorteil, dass das Analysegerät flexibel und modular aufgebaut werden kann. So kann z.B. das dritte Steuergerät auch weitere Komponenten des Analysegeräts steuern.

Bei dem zweiten und/oder dritten Steuergerät kann es sich vorteilhafterweise um einen handelsüblichen Personal Computer (PC) handeln.

In weiterer vorteilhafter Ausgestaltung des Verfahrens umfasst das Messsystem ein Controller Area Network Bussystem, bevorzugt ein Controller Area Network Bussystem nach ISO 11898, wobei die Messwerte vom ersten Steuergerät zum zweiten Steuergerät mittels des Controller Area Network Bussystems übertragen werden.

In weiterer vorteilhafter Ausgestaltung des Verfahrens erfolgt die Stromversorgung des ersten Steuergeräts und/oder der Messeinrichtung über die Schleifkontakte.

In weiterer vorteilhafter Ausgestaltung des Verfahrens sind das erste Steuergerät und die Messeinrichtung rotierbar gelagert, und das Gleitkontaktsystem umfasst ein Schleifringsystem.

In weiterer vorteilhafter Ausgestaltung des Verfahrens ist das zweite Steuergerät ortsfest angeordnet.

Ein weiterer Gegenstand der Erfindung ist ein automatisches Analysegerät umfassend ein erfindungsgemäßes Messsystem.

In vorteilhafter Ausgestaltung des Analysegeräts umfasst das Messsystem bevorzugt ein drittes Steuergerät, wobei das erste, zweite und/oder dritte Steuergerät so konfiguriert sind, dass sie ein erfindungsgemäßes Verfahren steuern können.

In weiterer vorteilhafter Ausgestaltung des Analysegeräts umfasst das automatische Analysegerät eine Vielzahl von Aufnahmepositionen für jeweils ein Primär-, Aliquot-, und/oder Zielgefäß, und/oder mindestens eine automatische Pipettiervorrichtung mit einem robotisch verfahrbaren und/oder robotisch schwenkbaren Transferarm.

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

In weiterer bevorzugter Ausführungsform befindet sich die Probe in einer nicht ortsfesten Küvette, und mindestens eine, bevorzugt mindestens zwei Gerätebaugruppen sind als Aufnahmepositionen für die Küvette ausgestaltet. Dies hat den Vorteil, dass eine Vielzahl von Proben und Analysen besonders flexibel abgearbeitet werden können.

Eine an einer bewegbaren Einrichtung befestigte Messeinrichtung wird auch als bewegbare Messeinrichtung bezeichnet.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

### Die Erfindung wird anhand von Zeichnungen exemplarisch näher erläutert. Darin zeigen:

FIG. 1 ein erfindungsgemäßes automatisches Analysegerät (10),
FIG. 2 eine schematische Darstellung eines Messsystems (1) zur Messung einer Probe in einem automatischem Analysegerät.

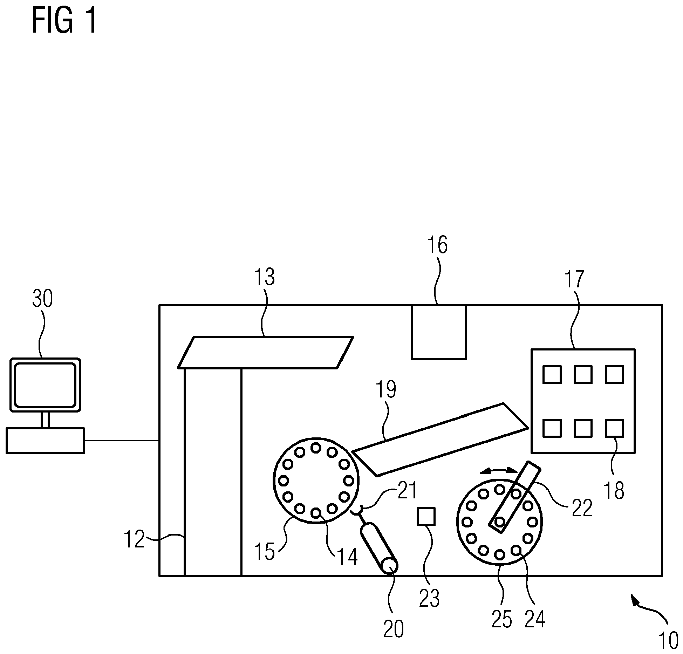

FIG. 1 zeigt eine schematische Darstellung eines automatischen Analysegeräts (10) mit einigen darin enthaltenen Bauteilen. Hierbei werden nur die wichtigsten Bauteile stark vereinfacht dargestellt, um die grundsätzliche Funktion des automatischen Analysegeräts (10) zu erläutern, ohne hierbei detailliert die einzelnen Teile jedes Bauteils darzustellen.

Das automatische Analysegerät (10) ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät (10) in Primärprobengefäßen auf nicht näher dargestellten Schlitten über eine Zuführungsschiene (12) zugeführt. Informationen hinsichtlich der pro Probe durchzuführenden Analysen können beispielsweise mittels auf den Probengefäßen angebrachten Strichcodes übergeben werden, die in dem automatischen Analysegerät (10) ausgelesen werden. Aus den Probengefäßen werden mit Hilfe einer ersten Pipettiervorrichtung (13) Probenaliquots mittels einer Pipettiernadel entnommen.

Die Probenaliquots werden ebenfalls nicht näher dargestellten Küvetten zugeführt, die in Aufnahmepositionen (14) einer drehbaren, auf 37 °C temperierten Inkubationseinrichtung (15) angeordnet sind. Die Küvetten werden aus einem Küvettenvorratsbehälter (16) entnommen, in dem die Küvetten ungeordnet als Schüttgut vorliegen. Erst bei der Entnahme einer einzelnen Küvette und der Platzierung der Küvette in eine Aufnahmeposition (14) wird für diese Küvette ein Datensatz erstellt, der zunächst die Information, dass es sich um eine Küvette handelt und in welcher Aufnahmeposition sie platziert ist, enthält. In dem auf ca. 8-10 °C gekühlten Reagenzgefäßvorratsbehälter (17) werden Reagenzgefäße (18) mit verschiedenen Reagenzflüssigkeiten aufbewahrt. Reagenzflüssigkeit wird mittels der Pipettiernadel einer zweiten Pipettiervorrichtung (19) aus einem Reagenzgefäß (18) entnommen und zur Bereitstellung eines Reaktionsansatzes in eine Küvette, die bereits ein Probenaliquot enthält, abgegeben. Die Küvette mit dem Reaktionsansatz wird von dem Transferarm (20) mit einem Greifer (21) aus einer Aufnahmeposition (14) der Inkubationseinrichtung (15) entnommen und zum Durchmischen des Reaktionsansatzes zu einer Schütteleinrichtung (23) transferiert. Nach Beendigung des Mischvorgangs wird die Küvette weiter in eine Aufnahmeposition (24) der Aufnahmevorrichtung (25) für eine Messeinrichtung, die ein Photometer (22) zur photometrischen Untersuchung der Probe umfasst, transportiert, wo die Extinktion des Reaktionsansatzes gemessen wird. Das Photometer (22) ist dabei in mindestens eine der beiden Richtungen der dargestellten Pfeile um eine Achse, die mittig bezüglich der Aufnahmevorrichtung 25 angeordnet ist, drehbar oder bevorzugt rotierbar ausgestaltet.

Der gesamte Prozess wird von einer Steuereinheit (30), wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts (10) und seiner Bauteile. Die Steuereinheit (30) umfasst dabei ein Steuergerät, kann jedoch in weiteren Ausführungen auch zwei oder mehr Steuergeräte umfassen.

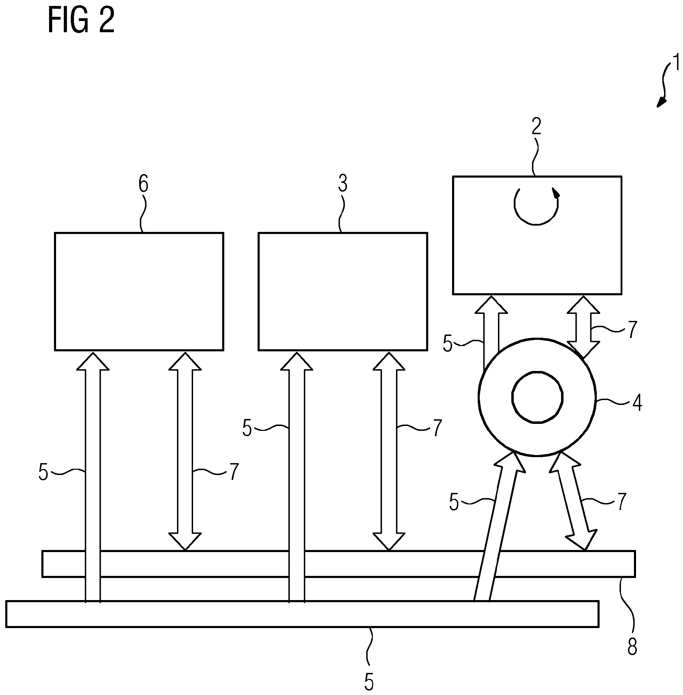

Die Messeinrichtung mit dem Photometer (22) ist Teil eines Messsystems (1), das in FIG. 2 näher beschrieben wird.

Das in FIG. 2 schematisch dargestellte Messsystem (1) ist zur Messung einer Probe in einem automatischen Analysegerät (10), wie beispielhaft in FIG. 1 dargestellt, ausgebildet. Das Messsystem (1) umfasst eine Messeinrichtung (nicht gezeigt) zur Aufnahme von Messwerten einer Messgröße und ein erstes, ein zweites und ein drittes Steuergerät (2, 3, 6) zur Verarbeitung der Messwerte und einen Schleifring (4) mit Schleifkontakten. Die Messwerte werden zunächst von der Messeinrichtung zum ersten Steuergerät (2) übertragen. Vom ersten Steuergerät (2) werden die Messwerte anschließend über die Schleifkontakte des Schleifrings (4) zum zweiten Steuergerät (3) und zum dritten Steuergerät (6) übertragen. Das Messsystem (1) umfasst einen Fehlerzähler, der die auftretenden Fehler bei der Übertragung der Messwerte vom ersten Steuergerät (2) über die Schleifkontakte zum zweiten Steuergerät (3) bzw. dritten Steuergerät (6) erfasst. Das Messsystem (1) umfasst weiterhin eine Stromversorgung (5), mittels der die Steuergeräte (2, 3, 6) und die Messeinrichtung mit elektrischer Energie zu deren Betrieb versorgt werden. Graphisch dargestellt ist der Weg der Daten (7), z.B. der Messwerte, bzw. der elektrischen Energie. Die Übertragung der Daten (7) und/oder der elektrischen Energie zwischen den Steuergeräten (2, 3, 6) erfolgt über ein Controller Area Network Bussystem (8) nach ISO 11898.

### Bezugszeichenliste

- 1: Messsystem
- 2: erstes Steuergerät
- 3: zweites Steuergerät
- 4: Schleifringsystem
- 5: Stromversorgung
- 6: drittes Steuergerät
- 7: Daten
- 8: Controller Area Network Bussystem
- 10: Analysegerät
- 12: Zuführungsschiene
- 13: Pipettiervorrichtung
- 14: Aufnahmeposition
- 15: Inkubationseinrichtung
- 16: Küvettenvorratsbehälter
- 17: Reagenzgefäßvorratsbehälter
- 18: Reagenzgefäß
- 19: Pipettiervorrichtung
- 20: Transferarm
- 21: Greifer
- 22: Photometer
- 23: Schütteleinrichtung
- 24: Aufnahmeposition
- 25: Aufnahmevorrichtung
- 30: Steuereinheit

## Patentansprüche

1. Messsystem (1) zur Messung einer Probe in einem automatischem Analysegerät (10), das Messsystem (1) umfassend eine Messeinrichtung zur Aufnahme von Messwerten einer Messgröße und ein erstes und ein zweites Steuergerät (2, 3) zur Verarbeitung der Messwerte, wobei die Messeinrichtung und das erste Steuergerät (2) relativ zum zweiten Steuergerät (3) bewegbar sind und wobei die Messwerte von der Messeinrichtung zum ersten Steuergerät (2) übertragbar sind, und wobei das Messsystem (1) ein Gleitkontaktsystem umfasst, wobei das Gleitkontaktsystem Schleifkontakte umfasst, und wobei die Messwerte vom ersten Steuergerät (2) über die Schleifkontakte zum zweiten Steuergerät (3) übertragen werden,
**dadurch gekennzeichnet, dass** zur Überwachung der Schleifkontakte, das Messsystem (1) einen Fehlerzähler zur Erfassung von bei einer Übertragung von Messwerten vom ersten Steuergerät (2) über die Schleifkontakte zum zweiten Steuergerät (3) auftretenden Fehlern umfasst.

2. Messsystem (1) nach Anspruch 1, wobei die Stromversorgung (5) des ersten Steuergeräts (2) und/oder der Messeinrichtung über die Schleifkontakte erfolgt.

3. Messsystem (1) nach einem der vorhergehenden Ansprüche, wobei das erste Steuergerät (2) und die Messeinrichtung rotierbar gelagert sind und wobei das Gleitkontaktsystem ein Schleifringsystem (4) umfasst.

4. Messsystem (1) nach einem der vorhergehenden Ansprüche, wobei das zweite Steuergerät (3) ortsfest angeordnet ist.

5. Messsystem (1) nach einem der vorhergehenden Ansprüche, wobei das Messsystem (1) ein Controller Area Network Bussystem (8), bevorzugt ein Controller Area Network Bussystem (8) nach ISO 11898, umfasst und wobei die Messwerte vom ersten Steuergerät (2) zum zweiten Steuergerät (3) mittels des Controller Area Network Bussystem (8) übertragen werden.

6. Messsystem (1) nach einem der vorhergehenden Ansprüche, wobei die Messeinrichtung ein Photometer (22) zur photometrischen Untersuchung der Probe umfasst.

7. Verfahren zur Überwachung von Schleifkontakten in einem automatischem Analysegerät, wobei das automatische Analysegerät (10) ein Messsystem (1) nach einem der Ansprüche 1 bis 6 umfasst,
aufweisend die Schritte:
a) Bestimmung einer Summe S der auftretenden Fehler durch Addieren der auftretenden Fehler bei der Übertragung der Messwerte vom ersten Steuergerät (2) über die Schleifkontakte zum zweiten Steuergerät (3) über ein vorbestimmtes Zeitintervall T,
b) Vergleich der Summe S der auftretenden Fehler mit einem ersten vorbestimmten Grenzwert G,
c) Ausgeben eines Warnhinweises, dass die Schleifkontakte oder das Gleitkontaktsystem (4) gewartet und/oder ausgetauscht werden müssen, wenn die Summe S größer ist als der erste Grenzwert G,
wobei die Schritte a) und b) mittels des ersten und/oder des zweiten Steuergeräts (2, 3) durchgeführt werden.

8. Verfahren nach Anspruch 7, wobei das Messsystem (1) ein drittes Steuergerät (6) umfasst und wobei die Schritte a) und b) mittels des ersten, des zweiten und/oder des dritten Steuergeräts (2, 3, 6) durchgeführt werden.

9. Verfahren nach einem der Ansprüche 7 und 8, wobei das Messsystem (1) ein Controller Area Network Bussystem (8), bevorzugt ein Controller Area Network Bussystem (8) nach ISO 11898, umfasst und wobei die Messwerte vom ersten Steuergerät (2) zum zweiten Steuergerät (3) mittels des Controller Area Network Bussystems (8) übertragen werden.

10. Verfahren nach einem der Ansprüche 7 bis 9, wobei die Stromversorgung (5) des ersten Steuergeräts (2) und/oder der Messeinrichtung über die Schleifkontakte erfolgt.

11. Verfahren nach einem der Ansprüche 7 bis 10, wobei das erste Steuergerät (2) und die Messeinrichtung rotierbar gelagert sind und wobei das Gleitkontaktsystem ein Schleifringsystem (4) umfasst.

12. Verfahren nach einem der Ansprüche 7 bis 11, wobei das zweite Steuergerät (3) ortsfest angeordnet ist.

13. Automatisches Analysegerät (10) umfassend ein Messsystem (1) nach einem der Ansprüche 1 bis 6.

14. Automatisches Analysegerät (10) nach Anspruch 13, wobei das Messsystem (1) bevorzugt ein drittes Steuergerät (6) umfasst und wobei das erste, zweite und/oder dritte Steuergerät (2, 3, 6) so konfiguriert sind, dass sie ein Verfahren nach einem der Ansprüche 7 bis 12 steuern können.

15. Automatisches Analysegerät (10) nach einem der Ansprüche 13 oder 14, wobei das automatische Analysegerät (10) eine Vielzahl von Aufnahmepositionen für jeweils ein Primär-, Aliquot-, und/oder Zielgefäß, und/oder mindestens eine automatische Pipettiervorrichtung mit einem robotisch verfahrbaren und/oder robotisch schwenkbaren Transferarm umfasst.

## Claims

1. Measurement system (1) for measuring a sample in an automatic analysis device (10), the measurement system (1) comprising a measurement apparatus for recording measured values of a measured variable and a first and a second controller (2, 3) for processing the measured values, wherein the measurement apparatus and the first controller (2) are able to be moved relative to the second controller (3) and wherein the measured values are able to be transmitted from the measurement apparatus to the first controller (2), and wherein the measurement system (1) has a sliding contact system, wherein the sliding contact system comprises sliding contacts, and wherein the measured values are transmitted from the first controller (2) to the second controller (3) via the sliding contacts,
**characterized in that**, in order to monitor the sliding contacts, the measurement system (1) has a fault counter for recording faults that occur when transmitting measured values from the first controller (2) to the second controller (3) via the sliding contacts.

2. Measurement system (1) according to Claim 1, wherein power is supplied (5) to the first controller (2) and/or the measurement apparatus via the sliding contacts.

3. Measurement system (1) according to either of the preceding claims, wherein the first controller (2) and the measurement apparatus are mounted rotatably, and wherein the sliding contact system comprises a slip ring system (4).

4. Measurement system (1) according to one of the preceding claims, wherein the second controller (3) is arranged so as to be positionally fixed.

5. Measurement system (1) according to one of the preceding claims, wherein the measurement system (1) comprises a controller area network bus system (8), preferably a controller area network bus system (8) according to ISO 11898, and wherein the measured values are transmitted from the first controller (2) to the second controller (3) by way of the controller area network bus system (8).

6. Measurement system (1) according to one of the preceding claims, wherein the measurement apparatus comprises a photometer (22) for the photometric investigation of the sample.

7. Method for monitoring sliding contacts in an automatic analysis device, wherein the automatic analysis device (10) comprises a measurement system (1) according to one of Claims 1 to 6,
having the steps of:
a) determining a sum S of the faults that occur by adding up the faults that occur when transmitting the measured values from the first controller (2) to the second controller (3) via the sliding contacts over a predetermined time interval T,
b) comparing the sum S of the faults that occur with a first predetermined limit value G,
c) outputting a warning that the sliding contacts or the sliding contact system (4) need to be serviced and/or exchanged when the sum S is greater that the first limit value G,
wherein steps a) and b) are performed by way of the first and/or the second controller (2, 3).

8. Method according to Claim 7, wherein the measurement system (1) comprises a third controller (6), and wherein steps a) and b) are performed by way of the first, the second and/or the third controller (2, 3, 6).

9. Method according to either of Claims 7 and 8, wherein the measurement system (1) comprises a controller area network bus system (8), preferably a controller area network bus system (8) according to ISO 11898, and wherein the measured values are transmitted from the first controller (2) to the second controller (3) by way of the controller area network bus system (8) .

10. Method according to one of Claims 7 to 9, wherein power is supplied (5) to the first controller (2) and/or the measurement apparatus via the sliding contacts.

11. Method according to one of Claims 7 to 10, wherein the first controller (2) and the measurement apparatus are mounted rotatably, and wherein the sliding contact system comprises a slip ring system (4).

12. Method according to one of Claims 7 to 11, wherein the second controller (3) is arranged so as to be positionally fixed.

13. Automatic analysis device (10) comprising a measurement system (1) according to one of Claims 1 to 6.

14. Automatic analysis device (10) according to Claim 13, wherein the measurement system (1) preferably comprises a third controller (6), and wherein the first, second and/or third controller (2, 3, 6) are configured such that they are able to control a method according to one of Claims 7 to 12.

15. Automatic analysis device (10) according to either of preceding Claims 13 and 14, wherein the automatic analysis device (10) comprises a multiplicity of reception positions respectively for a primary, aliquot and/or target vessel and/or at least one automatic pipette device having a robotically displaceable and/or robotically pivotable transfer arm.

## Revendications

1. Système (1) de mesure pour la mesure d'un échantillon dans un appareil (10) d'analyse automatique, le système (1) de mesure comprenant un dispositif de mesure d'enregistrement de valeurs de mesure d'une grandeur de mesure et un premier et un deuxième appareil (2,3) de commande pour le traitement des valeurs de mesure, le dispositif de mesure et le premier appareil (2) de commande pouvant être déplacés par rapport au deuxième appareil (3) de commande et les valeurs de mesure pouvant être transmises du dispositif de mesure au premier appareil (2) de commande et dans lequel le système (1) de mesure comprend un système à contacts frotteurs, le système à contacts frotteurs comprenant des contacts frotteurs et dans lequel les valeurs de mesure sont transmises du premier appareil (2) de commande au deuxième appareil (3) de commande par les contacts frotteurs, **caractérisé en ce que**, pour le contrôle des contacts frotteurs, le système (1) de mesure comprend un compteur d'erreurs pour la détection d'erreurs se produisant lors de la transmission des valeurs de mesure du premier appareil (2) de commande au deuxième appareil (3) de commande par les contacts frotteurs.

2. Système (1) de mesure suivant la revendication 1, dans lequel l'alimentation (5) en courant du premier appareil (2) de commande et/ou du dispositif de mesure s'effectue par les contacts frotteurs.

3. Système (1) de mesure suivant l'une des revendications précédentes, dans lequel le premier appareil (2) de commande et le dispositif de mesure sont montés tournants et dans lequel le système à contacts frotteurs comprend un système (4) à bague collectrice.

4. Système (1) de mesure suivant l'une des revendications précédentes, dans lequel le deuxième appareil (3) de commande est monté à poste fixe.

5. Système (1) de mesure suivant l'une des revendications précédentes, dans lequel le système (1) de mesure comprend un Controller Area Network Bussystem (8), de préférence un Controller Area Network Bussystem (8) suivant ISO 11898, et dans lequel les valeurs de mesure sont transmises du premier appareil (2) de commande au deuxième appareil (3) de commande au moyen du Controller Area Network Bussystem (8).

6. Système (1) de mesure suivant l'une des revendications précédentes, dans lequel le dispositif de mesure comprend un photomètre (22) d'examen photométrique de l'échantillon.

7. Procédé de contrôle de contacts frotteurs d'un appareil d'analyse automatique, l'appareil (10) d'analyse automatique comprenant un système (1) de mesure suivant l'une des revendications (1) à 6,
comportant les stades :
a) détermination d'une somme S des erreurs se produisant par addition des erreurs se produisant lors de la transmission des valeurs de mesure du premier appareil (2) de mesure au deuxième appareil (3) de mesure par les contacts frotteurs sur un intervalle T de temps déterminé à l'avance,
b) comparaison de la somme S des erreurs se produisant à une première valeur G limite déterminée à l'avance,
c) émission d'une indication d'alerte, que les contacts frotteurs ou le système (4) à contacts frotteurs doivent être entretenus et/ou remplacés, si la somme S est plus grande que la première valeur G limite,
dans lequel on effectue les stades a) et b) au moyen du premier et/ou du deuxième appareil (2,3) de commande.

8. Procédé suivant la revendication 7, dans lequel le système (1) de mesure comprend un troisième appareil (6) de commande et dans lequel on effectue les stades a) et b) au moyen du premier, du deuxième et/ou du troisième appareil (2,3,6) de commande.

9. Procédé suivant l'une des revendications 7 et 8, dans lequel le système (1) de mesure comprend un Controller Area Network Bussystem (8), de préférence un Controller Area Network Bussystem (8) suivant ISO 11898, et dans lequel les valeurs de mesure sont transmises du premier appareil (2) de commande au deuxième appareil (3) de commande au moyen du Controller Area Network Bussystem (8).

10. Procédé suivant l'une des revendications 7 à 9, dans lequel l'alimentation (5) en courant du premier appareil (2) de commande et/ou du dispositif de mesure s'effectue par les contacts frotteurs.

11. Procédé suivant l'une des revendications 7 à 10, dans lequel le premier appareil (2) de commande et le dispositif de mesure sont montés tournants et dans lequel le système à contacts frotteurs comprend un système (4) à bague collectrice.

12. Procédé suivant l'une des revendications 7 à 11, dans lequel le deuxième appareil (3) de commande est monté à poste fixe.

13. Appareil (10) d'analyse automatique, comprenant un système (1) de mesure suivant l'une des revendications 1à 6.

14. Appareil (10) d'analyse automatique suivant la revendication 13, dans lequel le système (1) de mesure comprend de préférence un troisième appareil (6) de commande et dans lequel le premier, le deuxième et/ou le troisième appareil (2,3,6) de commande sont configurés de manière à pouvoir commander un procédé suivant l'une des revendications 7 à 12.

15. Appareil (10) d'analyse automatique suivant l'une des revendications 13 ou 14, dans lequel l'appareil (10) d'analyse automatique comprend une pluralité de positions de réception de, respectivement, un récipient primaire, aliquote et/ou cible, et/ou au moins un système de pipetage automatique ayant un bras de transfert pouvant être déplacé par robot et/ou pouvant pivoter par robot.
